# EUROPÄISCHE PATENTSCHRIFT

(11) **EP 3 158 130 B1**
(45) Veröffentlichungstag und Bekanntmachung des Hinweises auf die Patenterteilung: **28.03.2018**
(21) Anmeldenummer: 15745445.5
(22) Anmeldetag: 29.07.2015
(51) Int. Cl.: D21F 5/20, F26B 23/00, F26B 21/02

(54) **VERFAHREN UND VORRICHTUNG ZUR TROCKNUNG EINES TROCKNUNGSGUTS UND INDUSTRIELLE ANLAGE**
METHOD AND APPARATUS FOR DRYING STOCK AND INDUSTRIAL PLANT
PROCÉDÉ ET DISPOSITIF DE SÉCHAGE D'UN PRODUIT À SÉCHER ET INSTALLATION INDUSTRIELLE

(30) Priorität: 29.07.2014 DE 102014010984
(43) Veröffentlichungstag der Anmeldung: 26.04.2017
(73) Patentinhaber: Siemens Aktiengesellschaft, 80333 München (DE)
(72) Erfinder: REISSNER, Florian, 90425 Nürnberg (DE); SCHWARZ, Hermann, 97084 Würzburg (DE); SCHÄFER, Jochen, 90408 Nürnberg (DE)
(86) Internationale Anmeldenummer: PCT/EP2015/067364
(87) Internationale Veröffentlichungsnummer: WO 2016/016297

(56) Entgegenhaltungen:
- WO-A1-82/02939
- WO-A1-86/02149
- DE-A1- 2 630 853

## Beschreibung

Die Erfindung betrifft eine Vorrichtung und ein Verfahren zur Trocknung eines Trocknungsguts. Weiter betrifft die Erfindung eine industrielle Anlage. Bei der Herstellung von zellstoffhaltigen Grundstoffen wie Papier oder Pappe ist an unterschiedlichen Stellen eine Trocknung eines wasser- oder lösungsmittelhaltigen Trocknungsguts, insbesondere Pulpe oder eine zellstoffhaltige Warenbahn, vorgesehen. Gegenwärtig erfolgt eine solche Trocknung durch eine Kontakttrocknung oder Durchstrom-Trocknung. Bei der Durchstrom-Trocknung in einer Trocknungseinheit wird Gas oder Dampf einer hohen Temperatur (möglichst über 100°C) durch oder über das Trocknungsgut geleitet. Dabei verdunstet zumindest ein Teil des Lösemittels und wird durch den Dampfstrom vom dem Grundstoff getrennt.

Nachteilhaft bei diesem Verfahren ist der hohe Bedarf an thermischer Energie und des hohen Aufkommen von Abwärme. Eine Weiterentwicklung stellt ein Kreislauf dar, wobei der Kreislauf auf eine Zirkulation eines Wärmeträgers, insbesondere wasserdampfhaltige Luft einer hohen Temperatur, basiert. Dabei weist der Kreislauf eine Heizung sowie eine Trocknungseinheit auf. Die Heizung dient zur Heizung eines Wärmeträgers, die Trocknungseinheit zur Trocknung eines Trocknungsgutes (eigentliches Trocknungsgut und Lösemittel) mit Hilfe des Wärmeträgers und ein optionaler Kondensator für das Lösemittel, insbesondere Wasser, dient zur Extraktion des Lösemittels aus dem Wärmeträger.

Die DE 26 30 853 A1, WO 82/02939 A1 und WO 86/02149 A1 betreffen Anlagen zur Trocknung. Die DE 26 30 853 A1 offenbart eine Vorrichtung gemäß dem Oberbegriff des Anspruchs 1. Aufgabe der Erfindung ist es, die Trocknung eines Trocknungsguts zu verbessern, insbesondere energieeffizienter zu gestalten.

Die Aufgabe wird durch eine Vorrichtung gemäß Anspruch 1 gelöst.

Die Aufgabe wird weiter durch ein Verfahren gemäß Anspruch 8 gelöst.

Die Aufgabe wird überdies mit einer industriellen Anlage gemäß Anspruch 11. Weitere vorteilhafte Ausgestaltungen sind Gegenstände der abhängigen Ansprüche.

Unter einem **Kreislauf** wird ein Rohrsystem verstanden, durch das ein Wärmeträger zirkuliert.

Der erste Kreislauf dient hierbei zur Zirkulation des ersten Wärmeträgers. Der erste Kreislauf dient insbesondere zur Wiederzuführung des ersten Wärmeträgers in die Trocknungseinheit.

Der zweite Kreislauf ist mit dem ersten Kreislauf gekoppelt. Der zweite Kreislauf umfasst erfindungsgemäß eine Wärmepumpe zur Einspeisung von Wärmeenergie in den ersten Kreislauf.

Als Trocknungsgut kommt eine Fasermatte, insbesondere Papier oder Pappe, ein zellstoffhaltiger Grundstoff bei der Papierherstellung, mit Wasser vermengtes Altpapier aber auch ein Grundstoff bei der Herstellung von Lebensmitteln in Betracht.

Unter einem ersten Wärmeträger wird vorzugsweise ein Gas verstanden, welches zur Trocknung eines Trocknungsgutes mit Hilfe einer Trocknungseinheit geeignet ist. Vorzugsweise dient als erster Wärmeträger Luft oder eine Mischung von Luft und Wasserdampf.

Die Trocknungseinheit dient im Rahmen der Erfindung zur Trocknung des Trocknungsgutes, d. h. die Trennung des Trocknungsguts von einem Lösemittel, mit Hilfe eines durchlaufenden ersten Wärmeträgers. Eine solche Trocknungseinheit kann ein Durchlauftrockner sein. Die Trocknungseinheit dient hierbei zur Trennung des Trocknungsgutes von einem Lösemittel, das durch den ersten Wärmeträger aufgenommen wird. Das Lösemittel wird an einer anderen Stelle im ersten Kreislauf, insbesondere in einer Verdampfungseinheit, wieder von dem ersten Wärmeträger getrennt und aus dem ersten Kreislauf entfernt.

Als zweiter Wärmeträger dient eine leicht verdampfbare Flüssigkeit. Der zweite Wärmeträger nimmt auf einer Seite Wärmeenergie auf und gibt die aufgenommene Wärmeenergie an einer anderen Stelle des Kreislaufes wieder ab.

Zur Aufnahme der Wärmeenergie in den zweiten Kreislauf dient vorteilhaft eine Verdampfungseinheit. In einer Verdampfungseinheit wird der zweite Wärmeträger verdampft, d.h. von der flüssigen Phase in die gasförmige Phase umgewandelt. Dabei wird die Verdampfungswärme aufgenommen und dem zweiten Wärmeträger zugeführt.

Dem zweiten Kreislauf kann auch durch weitere Wärmequellen Wärmeenergie zugeführt werden. Als Wärmequellen dient vorzugsweise eine Abwärme-Quelle einer elektrischen Maschine oder einer Verbrennungskraftmaschine. Weiter kann auch eine konventionelle Wärmequelle, zumindest zeitweise, zum Einsatz kommen.

Eine Wärmepumpe weist regelmäßig eine Verdampfungseinheit und eine Kondensationseinheit auf. Für Transport des Wärmeträgers weist die Wärmepumpe zusätzlich eine Pumpe auf, wobei die Pumpe zum Transport des zweiten Wärmeträgers von der Verdampfungseinheit zur Kondensationseinheit vorgesehen ist.

Die Verdampfungseinheit dient zur Verdampfung des zweiten Wärmeträgers. Bei der Verdampfung wird Wärmeenergie vom zweiten Wärmeträger aufgenommen.

Die Kondensationseinheit dient zur Kondensierung des gasförmigen zweiten Wärmeträgers. Bei der Kondensation wird Wärmeenergie vom zweiten Wärmeträger abgegeben.

Der erste Kreislauf weist zum Transport des ersten Wärmeträgers vorteilhaft ein Gebläse auf. Das Gebläse dient zur Aufrechterhaltung der Zirkulation des ersten Wärmeträgers. Es findet kein Austausch von Wärmeträger zwischen dem ersten Kreislauf und dem zweiten Kreislauf statt. Dadurch wird eine Vermischung oder Vermengung des ersten Wärmeträgers und des zweiten Wärmeträgers vermieden.

Die Wärmeenergie wird vorteilhaft durch eine Kondensationseinheit der Wärmepumpe an den ersten Wärmeträger im ersten Kreislauf übertragen. Die Kondensationseinheit ist ein Wärmeübertrager, der die Wärmeenergie des kondensierenden zweiten Wärmeträgers an den ersten Wärmeträger überträgt.

Um den ersten Wärmeträger wiederholt zu verwenden, durchläuft der erste Wärmeträger in einem ersten Kreislauf die Trocknungseinheit und nimmt dort Lösemittel auf. Das Lösemittel wird an einer weiteren Stelle wieder abgegeben. Weiter wird mit Hilfe des zweiten Wärmekreislaufs dem ersten Wärmeträger Wärmeenergie zugeführt. Nach der Zuführung der Wärmeenergie wird der erste Wärmeträger wieder der Trocknungseinheit zugeführt. Die Zuführung der Wärmeenergie in den ersten Kreislauf erfolgt mit Hilfe des zweiten Kreislaufs, wobei der zweite Kreislauf als Wärmepumpe, insbesondere als Hochtemperaturwärmepumpe ausgebildet ist. Die Wärmepumpe kann Wärmeenergie aus dem ersten Kreislauf aufnehmen und diese an einer anderen Stelle dem ersten Wärmekreislauf wieder zuführen. Ein zweiter Kreislauf, der als Wärmepumpe ausgestaltet ist, kann die Wärmeenergie ebenso aus einem Reservoir oder der Umgebung aufnehmen.

Vorteilhaft weist der erste Wärmeträger eine erste Temperatur von 100° C bis 200° C, besonders vorteilhaft 130° C bis 160° C vor der Trocknungseinheit auf. Bei dem ersten Wärmeträger handelt es sich vorteilhaft um Wasserdampf, insbesondere überhitzten Wasserdampf, der durch Aufnahme von Lösemittel, insbesondere Wasser, in der Trocknungseinheit vorteilhaft erhitzt wird.

Durch den Einsatz einer Wärmepumpe zur Erwärmung des ersten Wärmeträgers sinkt der Energieverbrauch beim Betrieb der Trocknungseinheit. Eine besonders kompakte Ausgestaltung einer Vorrichtung zur Trocknung eines Trocknungsgutes ergibt sich bei der gleichzeitigen Aufnahme der Wärmeenergie aus dem ersten Kreislauf.

In einer vorteilhaften Ausgestaltung entnimmt der zweite Kreislauf Wärmeenergie aus dem ersten Kreislauf.

Bei der Aufnahme der Wärmeenergie aus dem ersten Kreislauf wird vorzugsweise eine Verdampfungseinheit eingesetzt. Die Verdampfungseinheit dient zur Aufnahme von Wärmeenergie von dem ersten Wärmeträger, insbesondere bei der Kondensation des Lösemittels aus dem ersten Wärmeträger. Die Verdampfungseinheit dient zur Übertragung von Wärmeenergie aus dem ersten Kreislauf zum zweiten Kreislauf. Die aus dem ersten Kreislauf entnommene Wärmeenergie dient zur Verdampfung des zweiten Wärmeträgers. Durch die Aufnahme von Wärmeenergie aus dem ersten Kreislauf wird vorteilhaft das Lösemittel aus dem ersten Wärmeträger kondensiert. Das Lösemittel wurde zuvor in der Trocknungseinheit dem ersten Wärmeträger bei der Trocknung des Trocknungsgutes zugeführt.

Sowohl die Kondensationseinheit als auch die Verdampfungseinheit sind als Wärmeübertrager ausgestaltet.

Als Wärmeübertrager wird ein Rohrbündelwärmeübertrager verwendet. Vorteilhaft ist diese Ausgestaltung, weil die Kondensationswärme des Lösemittels wieder in den Kreislauf zurückgeführt werden kann.

In einer weiteren vorteilhaften Ausgestaltung weist die Vorrichtung zumindest eine weitere Wärmepumpe zur Einspeisung von Wärmeenergie in den ersten Kreislauf und/oder in den zweiten Kreislauf auf.

Vorteilhaft dient die weitere Wärmepumpe zur Bereitstellung der Wärmeenergie für den ersten Kreislauf oder für den zweiten Kreislauf. Die weitere Wärmepumpe kann zur Erwärmung des ersten Wärmeträgers und/oder des zweiten Wärmeträger Wärmeenergie aus einem Reservoir entnehmen.

Vorteilhaft können bei Einsatz einer weiteren Wärmepumpe Verluste ein einem Kreislauf mit Hilfe von einem Reservoir, insbesondere einem Reservoir von Abwärme, ausgeglichen werden. Der erste Kreislauf und der zweite Kreislauf stehen lediglich über Wärmeübertrager in Verbindung.

Wie vorstehend ausgeführt sind die Kondensationseinheit und die Verdampfungseinheit als Wärmeübertrager ausgeführt. Hierdurch wird eine Vermischung des ersten und des zweiten Wärmeträgers wirksam verhindert und das Trocknungsgut vorteilhaft vor Verunreinigungen des zweiten Wärmeträgers geschützt.

In einer weiteren Ausgestaltung der Vorrichtung ist zur Einspeisung der Wärmeenergie aus dem ersten Kreislauf in den zweiten Kreislauf eine Verdampfungseinheit vorgesehen.

Die Verdampfungseinheit dient zur Aufnahme der Wärmeenergie, die bei Kondensation des Lösemittels im ersten Kreislauf frei wird. Sowohl die Verdampfungseinheit als auch die Kondensationseinheit dient der Verdampfung bzw. der Kondensation des zweiten Wärmeträgers.

Durch den Einsatz einer Verdampfungseinheit, die vorteilhaft Teil der Wärmepumpe ist, kann die Wärmeenergie aus dem ersten Kreislauf an den zweiten Kreislauf übertragen werden.

Vorteilhaft an einer Verdampfungseinheit ist, dass die Wärmeenergie, welche bei der Kondensation des Lösemittels frei wird, besonders effizient an den zweiten Wärmeträger übertragen werden kann.

Bei einer weiteren Ausgestaltung der Vorrichtung weist der erste Kreislauf ein Gebläse auf.

Das Gebläse dient zur Aufrechterhaltung der Zirkulation des ersten Wärmeträgers im ersten Kreislauf. Mit einem Gebläse kann vorteilhaft die Geschwindigkeit der Zirkulation des ersten Wärmeträgers durch den ersten Kreislauf gesteuert bzw. geregelt werden. Eine solche Steuerung oder Regelung erfolgt vorteilhaft mit einer hier beschriebenen Steuereinrichtung oder einer globalen Prozesssteuerung der Anlage, in der die Vorrichtung integriert ist.

In einer vorteilhaften Ausgestaltung ist die Wärmepumpe eine Hochtemperaturwärmepumpe.

Eine Hochtemperaturwärmepumpe zeichnet sich durch einen besonders guten Wirkungsgrad in einem Temperaturbereich oberhalb von 100°C aus. So kann mit Hilfe einer Hochtemperaturwärmepumpe vorteilhaft Wärmeenergie von der Verdampfungseinheit zur Kondensationseinheit übertragen werden.

Neben der Verdampfungseinheit und der Kondensationseinheit umfasst die (Hochtemperatur-) Wärmepumpe einen Kompressor. Der Kompressor dient zum Transport des zweiten Wärmeträgers von der Verdampfungseinheit in der gasförmigen Phase und/oder zum Transport des zweiten Wärmeträgers von der Kondensationseinheit zur Verdampfungseinheit. Eine Hochtemperaturwärmepumpe zeichnet sich insbesondere durch die Verwendung eines geeigneten zweiten Wärmeträgers aus.

In einer vorteilhaften Ausgestaltung der Vorrichtung ist zur Einspeisung der Wärmeenergie in den ersten Kreislauf eine Kondensationseinheit vorgesehen ist.

Ebenso wie die Verdampfungseinheit ist die Kondensationseinheit Teil der (Hochtemperatur-) Wärmepumpe. Die Kondensationseinheit dient zur Kondensation des zweiten Wärmeträgers und zum Übertrag der Wärmeenergie auf den ersten Wärmeträger, die bei der Kondensation des zweiten Wärmeträgers frei wird. Die Kondensationseinheit ist ebenfalls vorteilhaft als Wärmetauscher ausgestaltet. Durch den Einsatz einer Kondensationseinheit kann die Wärmeenergie besonders effizient aus dem zweiten Kreislauf in den ersten Kreislauf übertragen werden.

In einer weiteren vorteilhaften Ausgestaltung der Vorrichtung ist der erste Wärmeträger für den ersten Kreislauf Wasserdampf oder ein Gemisch aus Wasserdampf und Luft.

Das Trocknungsgut besteht vor dem Eintritt in die Trocknungseinheit meist aus einem Gemisch aus Wasser und einem Grundstoff, beispielswiese einem zellstoffhaltigen Grundstoff wie Pulpe. Das Wasser wird mit Hilfe der Trocknungseinheit von dem Grundstoff verdampft und somit von dem Grundstoff getrennt. Die Trennung des Wassers von dem Grundstoff erfolgt hierbei durch Einwirkung des ersten Wärmeträgers auf das Trocknungsgut. Dabei nimmt der erste Wärmeträger das Wasser, insbesondere durch Verdampfung auf.

Vorteilhaft an der Verwendung von Wasserdampf als ersten Wärmeträger sind der hohe Wärmeübertragungskoeffizient und der hohe Wärmekoeffizient von Wasser. Weiter vorteilhaft ist die große Verbreitung von Wasserdampf im Bereich industrieller Anlagen. Weiter vorteilhaft ist, dass der erste Wärmeträger das verdunstete Wasser nicht verunreinigt.

Der Wärmeträger für den zweiten Kreislauf ist der halogenierte Kohlenwasserstoff R1233zd(E) oder R1336mzz(Z) .

Hierbei steht R1233zd(E) beispielhaft für 1-Chlor-3,3,3-Trifluorpropen.

Die Wärmeträger sind aufgrund ihrer Kondensationseigenschaften und ihrer Verdampfungseigenschaften, wie unten näher ausgeführt, besonders gut zum Einsatz in Hochtemperaturwärmepumpen geeignet.

In einer vorteilhaften Ausgestaltung des Verfahrens entnimmt der zweite Kreislauf zumindest einen Teil der Wärmeenergie aus dem ersten Kreislauf.

Die Wärmeenergie aus dem ersten Kreislauf wird mit Hilfe eines Wärmeübertragers dem zweiten Kreislauf zugeführt. Vorteilhaft kann so die Temperatur des ersten Wärmeträgers gesteuert beziehungsweise geregelt werden. Weiter vorteilhaft erfolgt durch eine Kondensation des Lösemittels durch die Entnahme von Wärmeenergie aus dem ersten Kreislauf. Das Lösemittel wird so von dem ersten Wärmeträger getrennt.

In einer weiteren vorteilhaften Ausgestaltung des Verfahrens speist zumindest eine weitere Wärmepumpe Wärmeenergie in den ersten Kreislauf und/oder in den zweiten Kreislauf ein.

Durch die Zuführung von weiterer Wärmeenergie in den ersten Kreislauf und/oder den zweiten Kreislauf können vorteilhaft die Verluste des ersten Kreislaufs ausgeglichen werden. So kann vorteilhaft die Temperatur des ersten Wärmeträgers, insbesondere mit Hilfe der Steuereinrichtung sehr genau geregelt werden. Der erste Kreislauf und der zweite Kreislauf sind lediglich über Wärmeübertrager verbunden.

Besonders vorteilhaft an der Übertragung von Wärmeenergie mit Hilfe von Wärmeübertrager ist die Trennung der Stoffströme. So wird der zweite Wärmeträger nicht durch Reste des Trocknungsgutes oder Ähnlichem verunreinigt.

Die Erfindung eignet sich neben der Trocknung eines zellstoffhaltigen Grundstoffes oder einer Fasermatte zur Trocknung von Holzpellets, Klärschlamm, Lebensmitteln, Baustoffen sowie zum Einsatz in der chemischen Industrie zur Abtrennung von Lösemitteln eines Trocknungsguts bzw. eines sonstigen Gemisches.

Zusammenfassend ergibt sich durch die hier offenbarten Ausführungen der Erfindung eine Einsparung von Energie bei der Herstellung, insbesondere bei der Trocknung, des Grundstoffs. Diese Energieeinsparung führt zu einer ressourcensparenden Produktion von Grundstoffen, insbesondere von Pulpe und Papier. Gleichzeitig kann die Abwärme von weiteren Prozessen besser als bisher zur Energiegewinnung herangezogen werden.

Eine Trennung des ersten Kreislaufs vom zweiten Kreislauf verhindert darüber hinaus eine Verunreinigung der Wärmeträger. So können beispielsweise Teile der Wärmepumpe von Überresten des Trocknungsguts wirksam geschützt werden.

Im Folgenden wird die Erfindung anhand von Figuren beschrieben und erläutert. Dabei können die Merkmale in den einzelnen Figuren auch durch den Fachmann zu neuen Ausgestaltungen der Erfindung dienen, ohne das Wesen der Erfindung zu verlassen.

Es zeigen
- FIG 1: eine Vorrichtung zum Trocknen eines Trocknungsgutes,
- FIG 2: eine vereinfachte Vorrichtung zum Trocknen eines Trocknungsgutes,
- FIG 3: eine weitere Vorrichtung zum Trocknen eines Trocknungsgutes,
- FIG 4: ein Enthalpie-Druck-Diagramm eines zweiten Wärmeträgers sowie
- FIG 5: ein Wärmeübertragungs-Temperatur-Diagramm eines zweiten Wärmeträgers.

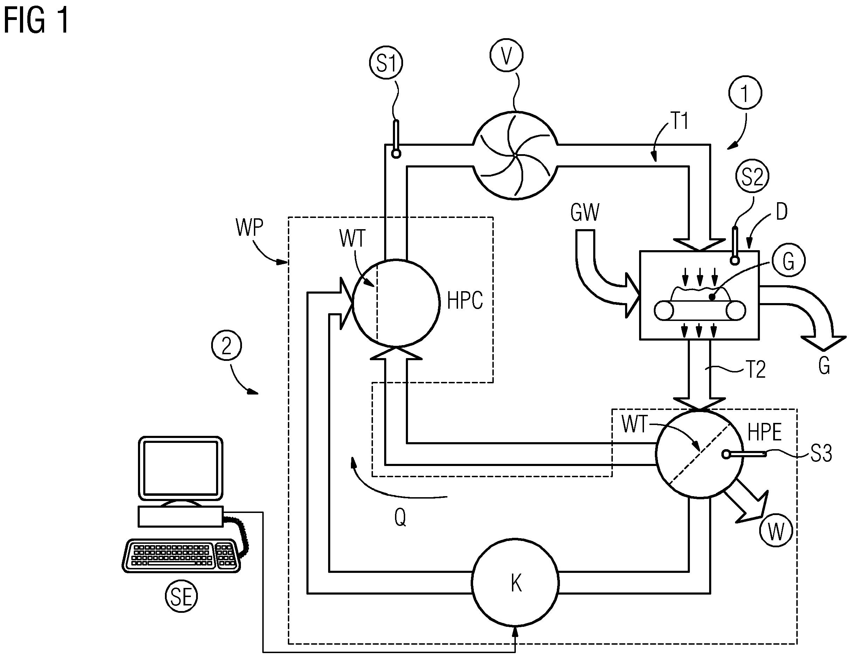

**FIG 1** zeigt eine Vorrichtung zum Trocknen eines Trocknungsgutes GW. Die Vorrichtung zeigt einen ersten Kreislauf 1 für einen ersten Wärmeträger, insbesondere Wasserdampf. Im ersten Kreislauf 1 wird der erste Wärmeträger mit Hilfe eines Gebläses V durch einen eine Trocknungseinheit D transportiert. Als Wärmeträger dient hier Wasserdampf, vorzugsweise einer Temperatur zwischen 100°C und 200°C. Der erste Wärmeträger weist vor der Trocknungseinheit D eine erste Temperatur T1 auf. Der erste Wärmeträger weist nach der Trocknungseinheit eine geringere zweite Temperatur T2 auf. Die Trocknungseinheit D dient zur Trocknung des lösemittelhaltigen Trocknungsgutes GW. Das lösemittelhaltige Trocknungsgut GW weist hier einen, insbesondere faserhaltigen, Feststoff G und ein Lösemittel W, insbesondere Wasser, auf. Das Lösemittel W verdunstet während der Trocknung in der Trocknungseinheit D und wird vom ersten Wärmeträger aufgenommen. Durch Aufnahme des Lösemittels W durch den ersten Wärmeträger verringert sich die Temperatur des ersten Wärmeträger von der ersten Temperatur T1 auf die zweite Temperatur T2. Nach der Trocknungseinheit D wird der erste Wärmeträger in die Verdampfungseinheit HPE überführt. In der Verdampfungseinheit HPE kondensiert das Lösemittel W und wird von dem Wärmeträger abgeschieden. Die Wärmeenergie Q, die bei der Kondensation des Lösemittels frei wird, wird mit Hilfe der Verdampfungseinheit HPE zu dem zweiten Wärmeträger überführt. Die Verdampfungseinheit HPE ist im Wesentlichen als Wärmeübertrager WT ausgeführt. Der erste Wärmeträger ohne das Lösemittel W wird weiter zu einer Kondensationseinheit HPC übertragen. Die Kondensationseinheit HPC führt dem ersten Wärmeträger die Wärmeenergie Q zu, die mit Hilfe der Verdampfungseinheit HPE dem ersten Wärmeträger entnommen worden ist.

Die (Wieder-) Einspeisung der Wärmeenergie Q in den ersten Kreislauf 1 erfolgt mit Hilfe des zweiten Kreislaufes 2. Der zweite Kreislauf 2 ist als Wärmepumpe WP ausgestaltet. Die Wärmepumpe WP umfasst die Verdampfungseinheit HPE, einen Kompressor K und die Kondensationseinheit HPC. Mit Hilfe des zweiten Wärmeträgers wird Wärmeenergie mit Hilfe der Verdampfungseinheit HPE aus dem ersten Kreislauf 1 entnommen und hierdurch das Lösemittel W aus dem ersten Wärmeträger kondensiert. Das Lösemittel W wird nach der Kondensation aus dem ersten Kreislauf 1 entfernt.

Der zweite Kreislauf 2 ist als Wärmepumpe WP, insbesondere als Hochtemperaturwärmepumpe WP ausgeführt. Die Wärmepumpe WP dient zum Transport der Wärmeenergie Q von der Verdampfungseinheit HPE zur Kondensationseinheit HPC. Die Wärmepumpe WP umfasst die Verdampfungseinheit HPE, die Kondensationseinheit HPC und einen Kompressor K. Der Kompressor K dient zum Transport des zweiten Wärmeträgers von der Verdampfungseinheit HPE zur Kondensationseinheit HPC (in gasförmigen Zustand) und zurück (in kondensiertem Zustand).

Sowohl die Kondensationseinheit HPC und die Verdampfungseinheit HPE umfassen einen Wärmeübertrager WT. Der Wärmeübertrage der Verdampfungseinheit HPE dient zum Übertrag der Wärmeenergie Q aus dem ersten Kreislauf 1 zum zweiten Kreislauf 2. Der Wärmeübertrager WT dient zum Übertrag der Wärmeenergie Q aus dem zweiten Kreislauf 2 zurück an den ersten Kreislauf 1.

Die Wärmeübertrager WT dienen insbesondere zum Übertrag von Wärmeenergie Q vom ersten Wärmeträger zum zweiten Wärmeträger und zurück. Die Wärmeübertrager WT sind als Rohrbündelwärmeübertrager ausgeführt.

Als zweiter Wärmeträger dient der halogenierte Kohlenwasserstoff R1233zd(E) oder R1336mzz(Z). Besonders vorteilhaft hat sich das Wärmeträger mit der Bezeichnung R1233zd(E) (CAS Nummer 102687-65-0, Chemische Bezeichnung: 1-Chloro-3,3,3-Trifluoropropen) erwiesen.

Besonders vorteilhaft weist der erste Wärmeträger vor Eingang in die Trocknungseinheit D eine erste Temperatur T1 von 140° C bis 160°C auf.

Nach der Trocknungseinheit D weist der erste Wärmeträger eine zweite Temperatur T2 von 80°C bis 120°C auf. Nach der Trocknungseinheit D kann der erste Wärmeträger ein übersättigter Wasserdampf sein. Vor der Trocknungseinheit D kann der erste Wärmeträger ein überhitzter Wasserdampf sein.

Die Wärmepumpe WP weist regelmäßig eine Turbine, einen Kompressor oder ein Pumpe zum Transport des zweiten Wärmeträgers auf. Die Wärmepumpe WP weist darüber hinaus zumindest ein Expansionsventil (nicht gezeigt) auf.

Der Kompressor K der Wärmepumpe WP wird vorteilhaft von einer Steuereinrichtung SE gesteuert oder geregelt. Die Steuereinrichtung SE weist zusätzlich Eingänge für Sensoren S1, S2, S3 auf. Die Sensoren S1, S2, S3 dienen zur Bestimmung der ersten Temperatur T1, der zweiten Temperatur T2 und optional der Bestimmung des Wassergehalts des ersten Wärmeträgers. Die Sensoren können an unterschiedlichen Stellen im ersten Kreislauf 1, im zweiten Kreislauf 2, insbesondere im Bereich der Trocknungseinheit D, Im Bereich der Verdampfungseinheit HPE und/oder im Bereich der Kondensationseinheit HPC lokalisiert sein. Je nach Temperaturdifferenz der ersten Temperatur T1 und der zweiten Temperatur T2 wird die Geschwindigkeit des Kompressors der Wärmepumpe WP gesteuert bzw. geregelt.

Die Steuereinrichtung SE kann durch einen Personal-Computer mit entsprechendem Interface, durch einen Mikrokontroller oder durch einen Teil einer übergeordneten Steuereinrichtung ausgeführt sein. Vorteilhaft ist die Steuereinrichtung als ein Computerprogramm ausgeführt, das auf einer Recheneinheit, insbesondere einem Personal-Computer, installiert ist und dort abläuft.

Die gestrichelten Linien bei der Verdampfungseinheit HPE und der Kondensationseinheit HPC symbolisieren, dass hier lediglich Wärmeenergie Q vom ersten Kreislauf 1 in den zweiten Kreislauf 2 (und umgekehrt) transportiert wird und die Wärmeübertrager WT regelmäßig für Wärmeträger undurchlässig gestaltet sind.

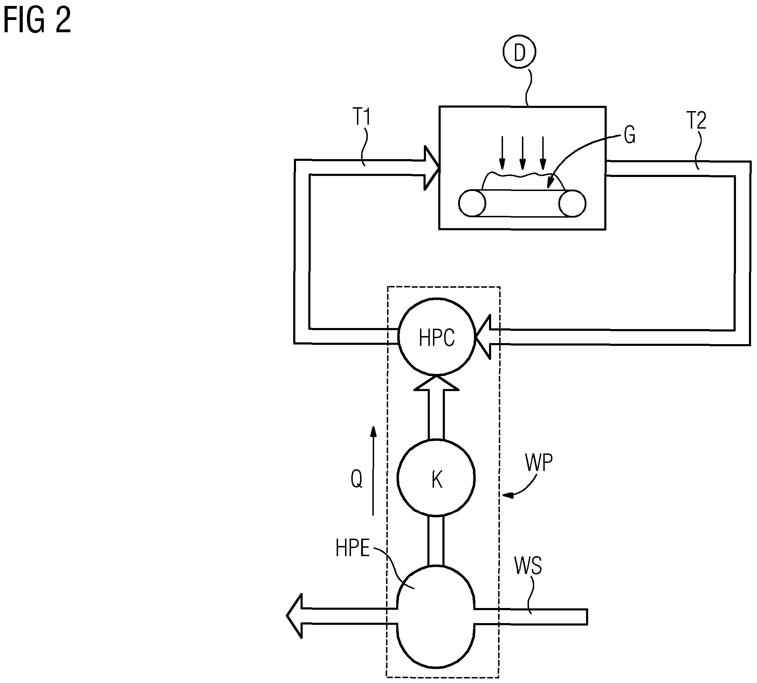

**FIG 2** zeigt eine vereinfachte Ausgestaltung der Vorrichtung zur Trocknung eines lösemittelhaltigen Trocknungsgutes GW. Wie auch in FIG 1 ausgeführt, dient die Trocknungseinheit D zur Trocknung des lösemittelhaltigen Trocknungsgutes GW. Die Trocknungseinheit D dient zur Auftrennung des lösemittelhaltigen Trocknungsgutes GW in den Grundstoff G, insbesondere einen zellstoffhaltiger Grundstoff, und das Lösemittel W, insbesondere Wasser.

Diese vereinfachte Ausführung weist, analog der vorangehenden Ausführungen einen ersten Kreislauf 1 für den ersten Wärmeträger und einen zweiten Kreislauf 2 für einen zweiten Wärmeträger auf. Der zweite Kreislauf 2 umfasst eine Wärmepumpe WP. Die Wärmepumpe WP dient zum Transport von Wärmeenergie Q aus einem Wärmestrom WS, insbesondere aus einem Wärmereservoir. Die Wärmepumpe WP überträgt Wärmeenergie Q aus dem Wärmereservoir WS in den ersten Kreislauf 1. Vorzugseise mit Hilfe eines Wärmeübertrager WT wird die Wärmeenergie Q zur Erhöhung der Temperatur des ersten Wärmeträgers bereitgestellt. Der Wärmeübertrager WT wird ebenfalls mit Hilfe einer Kondensationseinheit HPE (oder auch einer Verdampfungseinheit HPC) dem ersten Wärmeträger zur Verfügung gestellt.

Vor der Trocknungseinheit D weist der erste Wärmeträger eine Temperatur T1 auf. Nach der Trocknungseinheit D weist der Wärmeträger eine geringere Temperatur T2 auf. Somit wird dem Wärmeträger mit Hilfe der Wärmepumpe WP die Wärmeenergie Q zugeführt, die durch die Trocknungseinheit D verloren geht. Das Lösesmittel W kann dabei an einer Stelle des Kreislaufs 1 entweichen.

Die Wärmepumpe WP dient also in dieser vereinfachten Ausgestaltung zum Ausgleich der Wärmeenergie Q, die in der Trocknungseinheit D und durch das abgehende Lösemittel W entzogen wird.

Mit Hilfe eines Wärmeübertragers, der vorzugsweise als Regenerator ausgeführt ist, kann mit Hilfe eines Wärmeübertragers WT die Verdampfungseinheit HPE und die Kondensationseinheit HPC durch einen einzelnen regenerativen Wärmeübertrager WT ausgeführt sein. Dabei wird dem ersten Kreislauf 1 Wärmeenergie Q in einem ersten Zeitbereich zugeführt und in einem weiteren Zeitbereich abgeführt. Die Zeitbereiche können sich periodisch wiederholen.

Besonders vorteilhaft ist diese Ausgestaltung, weil mit Hilfe der Wärmepumpe WP Wärmeenergie Q aus einem Wärmestrom WS in den ersten Kreislauf 1 übertragen werden, obgleich die Temperatur des Wärmestroms WS niedriger als die zweite Temperatur T2 ist.

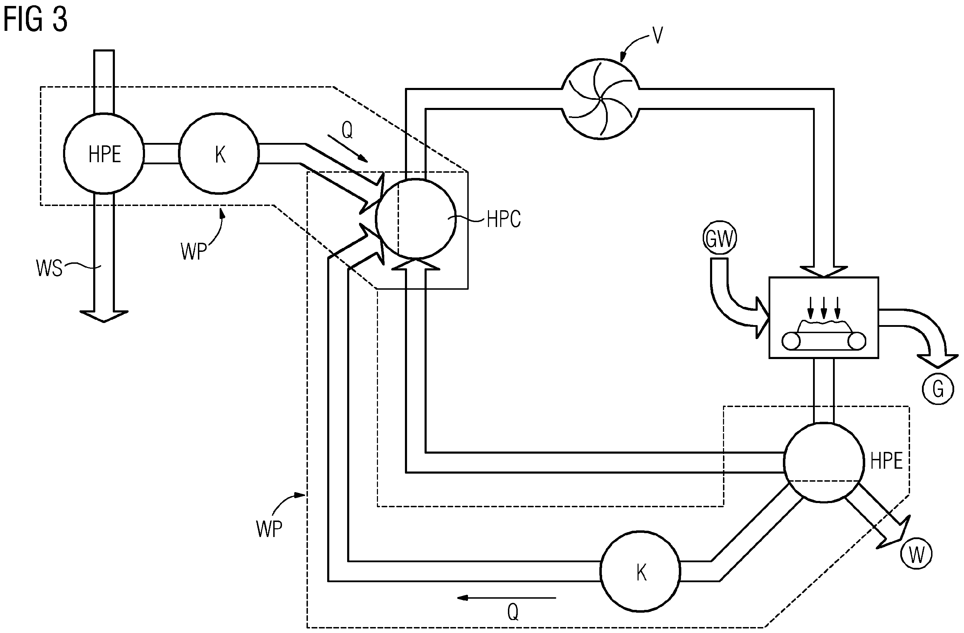

**FIG 3** zeigt eine weitere Ausführungsform der Vorrichtung zur Trocknung eines Trocknungsgutes GW. Diese Ausführung stellt eine Kombination der Ausführungen dar, die in FIG 1 und FIG 2 gezeigt sind und vorstehend beschrieben sind. Die hier gezeigte Ausführung umfasst zwei Wärmepumpen WP. Die erste Wärmepumpe WP dient zur Aufnahme der Kondensationswärme des Lösemittels W. Die erste Wärmepumpe überträgt die Wärmeenergie Q mit Hilfe des Kompressors zur Kondensationseinheit. Die Kondensationseinheit dient hierbei zur Übertragung von Wärmeenergie Q in den ersten Kreislauf 1. Der weitere Wärmeübertrager WP dient zur Bereitstellung zusätzlicher Wärmeenergie Q für den ersten Kreislauf 1. Mit Hilfe der zweiten Wärmepumpe WP werden Wärmeenergieverluste des ersten Kreislauf 1 ausgeglichen. Je nach Temperatur des ersten Wärmeträgers und dem Bedarf von Wärmeenergie Q dient die zweite Wärmepumpe WP zum Übertrag von Wärmeenergie Q aus einem Wärmestrom WS oder Reservoir in den ersten Kreislauf 1. Die Steuerung und/oder Regelung der ersten Wärmepumpe WP und der zweiten Wärmepumpe WP erfolgt mit einer Steuereinrichtung SE im Zusammenspiel mit Sensoren S1, S2, S3 (hier nicht gezeigt). In Bezug auf die Steuereinrichtung SE sei auf FIG 1 verwiesen.

Insbesondere am Anfang des Betriebs der industriellen Anlage kann dem ersten Kreislauf 1 zusätzliche Wärmeenergie zugeführt werden. Insbesondere kann auch konventionell gewonnene Wärmeenergie Q, beispielsweise durch Verbrennung eines Brennstoffs oder mit Hilfe elektrischer Energie, dem ersten Kreislauf 1 und/oder dem zweiten Kreislauf 2 zugeführt werden.

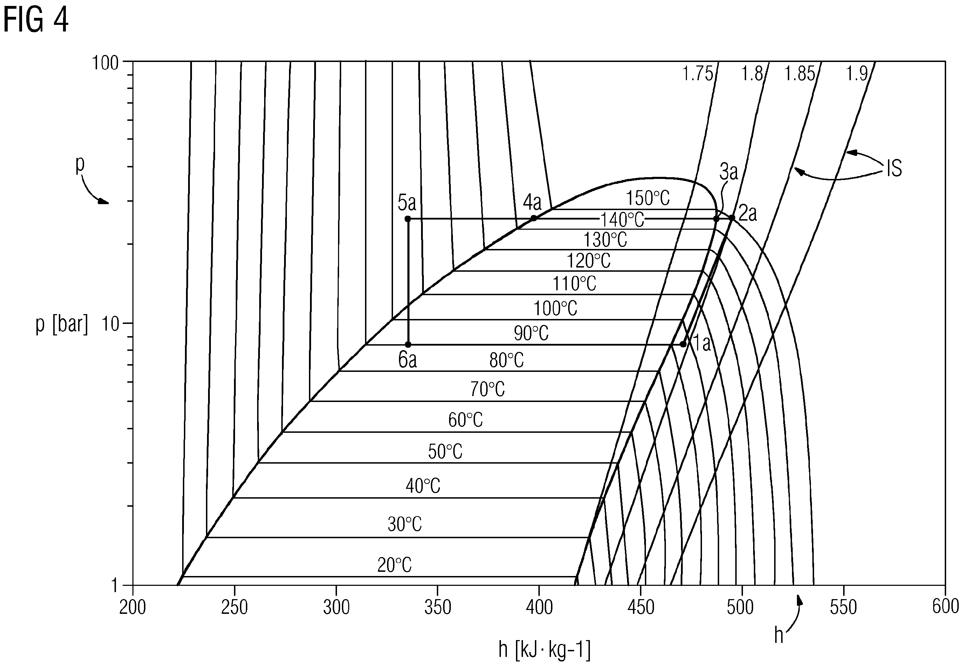

**FIG 4** zeigt ein Enthalpie-Druck-Diagramm eines zweiten Wärmeträgers. Auf der Abszisse ist die Enthalpie h in [kJ/Mol] aufgetragen. Auf der Ordinate ist der Druck p in [bar] logarithmisch aufgetragen. Das Diagramm zeigt eine Kurvenschar von Isothermen, wobei die Temperatur (des zweiten Wärmeträgers) oberhalb der jeweiligen Isotherme in Grad Celsius angegeben ist. Die dargestellten Isothermen geben das Verhalten des Druckes p des Wärmeträgers R1233zd(E) als Funktion der Enthalpie h an. Die Einhüllende der Punkte, an denen die Isothermen einen Knick aufweisen, entspricht der Phasengrenzen des zweiten Wärmeträgers. Im oberen Bereich der Einhüllenden ist ein thermodynamischer Zyklus, bestehend aus Folgenden Punkten 1a, 2a, 3a, 4a, 5a, 6a gezeigt. Der thermodynamische Zyklus entspricht dem Zyklus für die (Hochtemperatur-) Wärmepumpe. Hierbei entsprechen die Übergänge

| | |
|---|---|
| 1a -> 2a | eine polytrope Verdichtung, |
| 2a -> 3a | isobare Abkühlung, |
| 3a -> 4a | isobare Verflüssigung, |
| 4a -> 5a | isobare Abkühlung (Unterkühlung), |
| 5a -> 6a | isobare Verdampfung und Erwärmung bis zur Überhitzung des zweiten Wärmeträgers. |

Der zweite Wärmeträger liegt im linken Bereich als unterkühlte Flüssigkeit vor. Daher ist der Anstieg der Isothermen sehr steil. Im rechten Bereich des Diagramms fallen die Isothermen nach der Verdampfung mit ansteigender Enthalpie langsamer ab. In dem rechten Bereich liegt der zweite Wärmeträger als überhitztes Gas vor.

Bei der (polytropen) Verdichtung 1a -> 2a des zweiten Wärmeträgers erfolgt die Verdichtung auf eine Temperatur etwas oberhalb der ersten Temperatur T1, hier etwa 145 °C. Weiter erfolgt vorteilhaft die Expansion des zweiten Wärmeträgers von der Temperatur oberhalb der zweiten Temperatur T2 auf eine Temperatur (etwa 90°C) etwas unterhalb von der zweiten Temperatur T2 des ersten Wärmeträgers in der Verdampfungseinheit HPE.

Weiter gezeigt sind Isentropen IS als steil ansteigende Kurven. Die den Isentropen IS zugeordneten entsprechen den Zuständen gleicher Entropie. Die Zahlen geben eben diese Entropie in [kJ/(kg*K)] an.

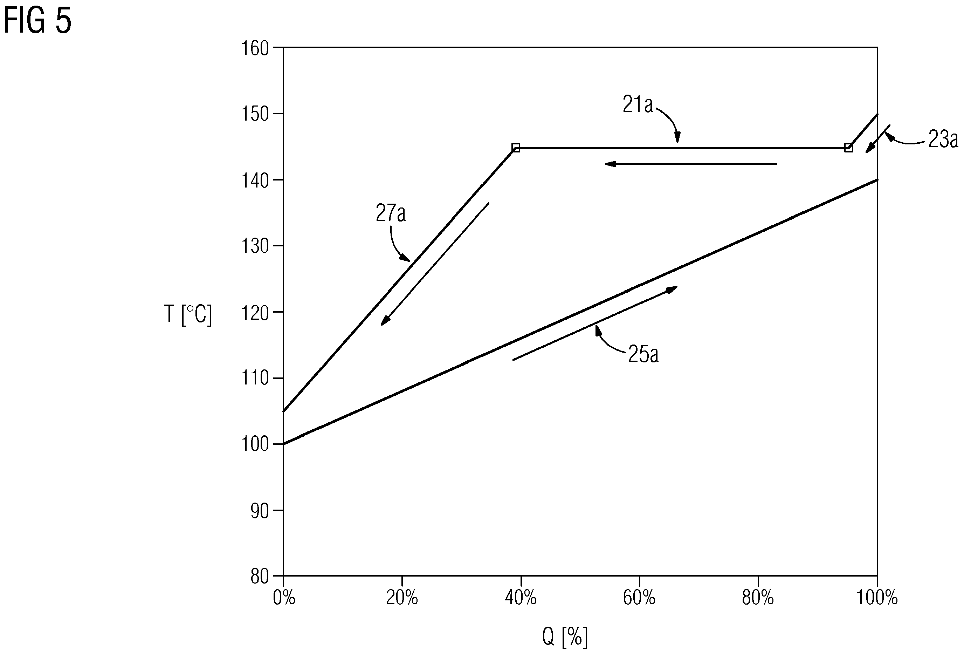

Durch die starke Unterkühlung des zweiten Wärmeträgers bis auf etwa 5 bis 10 Kelvin oberhalb der Eintrittstemperatur (erste Temperatur T1) des ersten Wärmeträgers in die Kondensationseinheit HPC kann das Verhältnis von Nutzleistung zu Arbeitsleistung (Leistungszahl COP) um bis zu 40% im Vergleich zum derzeitigen Stand der Technik gesteigert werden. **FIG 5** zeigt ein Wärmeübertragungs-Temperatur-Diagramm eines zweiten Wärmeträgers. Der obere Abschnitt beschreibt die Übertragung von Wärmeenergie Q vom ersten Wärmeträger zum zweiten Wärmeträger. Die Übertragung von Wärmeenergie Q wird in der oberen Kurve 21a, 23a, 27a symbolisiert. In einer Enthitzung 23a wird der zweite Wärmeträger von einer Temperatur oberhalb von der zweiten Temperatur T2 um etwa 5 Kelvin abgekühlt. Dabei wird ein kleiner Anteil von Wärmeenergie Q von dem zweiten Wärmeträger auf den ersten Wärmeträger übertragen. Bei der Kondensation des zweiten Wärmeträgers wird ein weiterer Teil der Wärmeenergie Q von dem zweiten Wärmeträger an den ersten Wärmeträger übertragen. Bei der Kondensation des zweiten Wärmeträgers bleibt die Temperatur des zweiten Wärmeträgers etwa konstant. Bei der weiter erfolgenden Unterkühlung 27a des zweiten Wärmeträgers sinkt die Temperatur des zweiten Wärmeträgers aus etwa 105°C ab. Bis hier ist die zu übertragende Wärmeenergie Q vom zweiten Wärmeträger abgegeben. Dieser Vorgang erfolgt insbesondere in der Kondensationseinheit.

Die von dem zweiten Wärmeträger abgegebene Wärmeenergie Q wird von dem ersten Wärmeträger aufgenommen. Die Temperatur des ersten Wärmeträgers steigt dabei von der zweiten Temperatur T2 (in diesem Beispiel 100°C) auf die erste Temperatur T1 (hier 140°C). Der Temperaturanstieg erfolgt bei der Überhitzung 25a des ersten Wärmeträgers.

Bei den thermodynamischen Betrachtungen, die in den hier beschriebenen Figuren FIG 1 bis FIG 5 behandelt werden, ist ein besonders bevorzugter erster Wärmeträger Wasserdampf und der zweite Wärmeträger der halogenierte Kohlenwasserstoff R1233zd(E) oder R1336mzz(Z). Besonders vorteilhaft wird der erste Wärmeträger mit einer (ersten) Temperatur T1 von etwa 140°C in die Trocknungseinheit D eingeführt. Bei der Aufnahme des Lösemittels W sinkt die Temperatur des ersten Wärmeträgers auf eine zweite Temperatur von 90°C bis 100°C, wie in FIG 4 gezeigt. Das Lösemittel W, insbesondere Wasser, wird im Bereich der Verdampfungseinheit HPE wieder kondensiert. Die dabei entstehende Wärmeenergie Q wird bei der Verdampfung des zweiten Wärmeträgers aufgenommen. Mit Hilfe des Kompressors der Wärmepumpe WP wird der zweite Wärmeträger in die Kondensationseinheit HPC übertragen. In der Kondensationseinheit HPE wird der zweite Wärmeträger enthitzt 23a, kondensiert 21a und weiter unterkühlt 27a. Die dabei vom zweiten Wärmeträger abgegebene Wärmeenergie Q wird zu einem überwiegenden Anteil auf den ersten Wärmeträger übertragen. Die Temperatur des ersten Wärmeträgers steigt dabei von der zweiten Temperatur T2 auf die erste Temperatur T1 an. Der erste Wärmeträger wird dann wieder der Trocknungseinheit D zugeführt.

Zusammenfassend betrifft die Erfindung eine Vorrichtung und ein Verfahren zur Trocknung eines Trocknungsgutes GW. Hierbei wird das lösemittelhaltige Trocknungsgut GW in einer Trocknungseinheit D in einen Grundstoff G und ein Lösemittel W mit Hilfe eines ersten Wärmeträgers getrennt. Der erste Wärmeträger durchläuft einen ersten Kreislauf 1. Nach Aufnahme des Lösemittels W durch den ersten Wärmeträger wird das Lösemittel W vom Wärmeträger durch Kondensation abgetrennt. Die (Kondensations-) Wärmeenergie Q wird durch einen Wärmeübertrager WT mit Hilfe einer Verdampfungseinheit HPE an einen zweiten Kreislauf 2 übertragen und für einen zweiten Wärmeträger bereitgestellt. Mit Hilfe einer Wärmepumpe WP wird die Wärmeenergie Q in einer Kondensationseinheit HPC der Wärmepumpe WP wieder dem ersten Kreislauf 1 zugeführt.

## Patentansprüche

1. Vorrichtung zur Trocknung eines Trocknungsguts (GW), insbesondere zur Trocknung der Pulpe bei der Herstellung einer Fasermatte, aufweisend eine Trocknungseinheit (D) in einem ersten Kreislauf, wobei ein erster Wärmeträger zur Trocknung des Trocknungsguts (GW) vorgesehen ist, weiter aufweisend einen zweiten Kreislauf (2) für einen zweiten Wärmeträger, wobei der zweite Kreislauf eine Wärmepumpe (WP) zur Einspeisung von Wärmeenergie (Q) in den ersten Kreislauf (1) aufweist,
**dadurch gekennzeichnet, dass** der Wärmeträger für den zweiten Kreislauf (2) der halogenierte Kohlenwasserstoff R1233zd(E) oder R1336mzz(Z) ist, und dass der erste Kreislauf (1) und der zweite Kreislauf (2) lediglich über Rohrbündelwärmeübertrager in Verbindung stehen.

2. Vorrichtung nach Anspruch 1, wobei der zweite Kreislauf (2) Wärmeenergie (Q) aus dem ersten Kreislauf (1) entnimmt.

3. Vorrichtung gemäß einem der Ansprüche 1 oder 2, weiter aufweisend zumindest eine weitere Wärmepumpe (WP) zur Einspeisung von Wärmeenergie (Q) in den ersten Kreislauf (1) und/oder in den zweiten Kreislauf (2).

4. Vorrichtung nach Anspruch 2 oder 3 wobei zur Einspeisung von der Wärmeenergie (1) aus dem ersten Kreislauf (1) in den zweiten Kreislauf (2) eine Verdampfungseinheit (HPE) vorgesehen ist.

5. Vorrichtung nach einem der vorangehenden Ansprüche, wobei der erste Kreislauf ein Gebläse (V) aufweist.

6. Vorrichtung nach einem der vorangehenden Ansprüche, wobei zur Einspeisung der Wärmeenergie (Q) in den ersten Kreislauf (1) eine Kondensationseinheit (HPC) vorgesehen ist.

7. Vorrichtung nach einem der vorangehenden Ansprüche, wobei der erste Wärmeträger für den ersten Kreislauf (1) Wasserdampf oder ein Gemisch aus Wasserdampf und Luft ist.

8. Verfahren zur Trocknung eines Trockenguts (GW), insbesondere Pulpe bei Herstellung einer zellstoffhaltigen Fasermatte, wobei das Trocknungsgut (GW) ein Lösemittel (W) und einen Feststoff aufweist, wobei ein erster Wärmeträger in einem ersten Kreislauf (1) zirkuliert, wobei der erste Wärmeträger das Trocknungsgut (GW) erwärmt und das von dem Trocknungsgut (GW) abgegebene Lösemittel (W) aufnimmt, wobei ein zweiter Kreislauf (2) Wärmeenergie (Q) in den ersten Kreislauf (1) einspeist und wobei eine Wärmepumpe (WP) die Wärmeenergie (Q) aus dem zweiten Kreislauf (2) in den ersten Kreislauf einführt, wobei ein zweiten Wärmeträger des zweiten Kreislaufs (2) der halogenierte Kohlenwasserstoff R1233zd(E) oder R1336mzz(Z) ist, und wobei der erste Kreislauf (1) und der zweite Kreislauf (2) lediglich über Wärmeübertrager (WT) verbunden sind und die Wärmeübertrager (WT) als Rohrbündelwärmeübertrager ausgebildet sind.

9. Verfahren nach Anspruch 8, wobei der zweite Kreislauf (2) zumindest einen Teil der Wärmeenergie (Q) aus dem ersten Kreislauf (1) entnimmt.

10. Verfahren gemäß einem der Ansprüche 8 oder 9, wobei zumindest eine weitere Wärmepumpe (WP) Wärmeenergie (Q) in den ersten Kreislauf (1) und/oder in den zweiten Kreislauf (2) einspeist.

11. Industrielle Anlage zur Herstellung eines Grundstoffes, insbesondere eine Papierfabrik oder eine Zellstofffabrik, aufweisend eine Vorrichtung nach einem der Ansprüche 1 bis 7.

## Claims

1. Apparatus for drying drying stock (GW), in particular for drying the pulp during the production of a fibre mat having a drying unit (D) in a first circuit, wherein a first heat transfer medium is provided for drying the drying stock (GW), further having a second circuit (2) for a second heat transfer medium, wherein the second circuit comprises a heat pump (WP) for feeding heat energy (Q) into the first circuit (1),
**characterised in that** the heat transfer medium for the second circuit (2) is the halogenated hydrocarbon R1233zd(E) or R1336mzz(Z) and the first circuit (1) and the second circuit (2) are only connected by tube-bundle heat exchangers.

2. Apparatus according to claim 1, wherein the second circuit (2) draws heat energy (Q) from the first circuit (1).

3. Apparatus according to one of claims 1 or 2, further having at least one further heat pump (WP) for feeding heat energy (Q) into the first circuit (1) and/or into the second circuit (2) .

4. Apparatus according to claim 2 or 3, wherein an evaporation unit (HPE) is provided for feeding the heat energy (1) from the first circuit (1) into the second circuit (2).

5. Apparatus according to one of the preceding claims, wherein the first circuit comprises a blower (V).

6. Apparatus according to one of the preceding claims, wherein a condensation unit (HPC) is provided for feeding the heat energy (Q) into the first circuit (1).

7. Apparatus according to one of the preceding claims, wherein the first heat transfer medium for the first circuit (1) is water vapour or a mixture of water vapour and air.

8. Method for drying drying stock (GW), in particular pulp during the production of a cellulose-containing fibre mat, wherein the drying stock (GW) comprises a solvent (W) and a solid material, wherein a first heat transfer medium circulates in a first circuit (1), wherein the first heat transfer medium heats the drying stock (GW) and takes up the solvent (W) released from the drying stock (GW), wherein a second circuit (2) feeds heat energy (Q) into the first circuit (1) and wherein a heat pump (WP) introduces the heat energy (Q) from the second circuit (2) into the first circuit, wherein a second heat transfer medium of the second circuit (2) is the halogenated hydrocarbon R1233zd(E) or R1336mzz(Z) and wherein the first circuit (1) and the second circuit (2) are only connected by heat exchangers (WT) and the heat exchangers (WT) are embodied as tube-bundle heat exchangers.

9. Method according to claim 8, wherein the second circuit (2) draws at least a part of the heat energy (Q) from the first circuit (1).

10. Method according to one of claims 8 or 9, wherein at least one further heat pump (WP) feeds heat energy (Q) into the first circuit (1) and/or into the second circuit (2).

11. Industrial plant for the production of a base material, in particular a paper mill or a cellulose mill comprising an apparatus according to one of claims 1 to 7.

## Revendications

1. Installation de séchage d'un produit (GW) à sécher, notamment de séchage de la pâte dans la fabrication d'une nappe de fibres, comportant une unité (D) de séchage dans un premier circuit, un premier caloporteur étant prévu pour sécher le produit (GW) à sécher, comportant en outre un deuxième circuit (2) pour un deuxième caloporteur, le deuxième circuit ayant une pompe (WP) à chaleur pour injecter de l'énergie (Q) calorifique dans le premier circuit (1),
**caractérisée en ce que** le caloporteur du deuxième circuit (2) est l'hydrocarbure halogéné R1233zd(E) ou R1336mzz (Z) et **en ce que** le premier circuit (1) et le deuxième circuit (2) sont en liaison uniquement par des caloporteurs pour faisceau tubulaire.

2. Installation suivant la revendication 1, dans laquelle le deuxième circuit (2) prélève de l'énergie (Q) calorifique du premier circuit (1).

3. Installation suivant l'une des revendications 1 ou 2, comportant en outre au moins une autre pompe (WP) à chaleur pour injecter de l'énergie (Q) calorifique dans le premier circuit (1) et/ou dans le deuxième circuit (2).

4. Installation suivant la revendication 2 ou 3, dans laquelle il est prévu une unité (HPE) d'évaporation pour injecter de l'énergie (1) calorifique du premier circuit (1) dans le deuxième circuit (2).

5. Installation suivant l'une des revendications précédentes, dans laquelle le premier circuit a une soufflante (V).

6. Installation suivant l'une des revendications précédentes, dans laquelle il est prévu une unité (HPC) de condensation pour injecter de l'énergie (Q) calorifique dans le premier circuit (1).

7. Installation suivant l'une des revendications précédentes, dans laquelle le premier caloporteur du premier circuit (1) est de la vapeur d'eau ou un mélange de vapeur d'eau et d'air.

8. Procédé de séchage d'un produit (GW) à sécher, notamment de pâte dans la fabrication d'une nappe de fibres cellulosiques, le produit (GW) à sécher ayant un solvant (W) et une matière solide, un premier caloporteur circulant dans un premier circuit (1), le premier caloporteur échauffant le produit (GW) à sécher et absorbant le solvant (W) cédé par le produit (GW) à sécher, dans lequel un deuxième circuit (2) injecte de l'énergie (Q) calorifique dans le premier circuit (1) et dans lequel une pompe (WP) à chaleur envoie l'énergie (Q) calorifique du deuxième circuit (2) dans le premier circuit, un deuxième caloporteur du deuxième circuit (2) étant l'hydrocarbure halogéné R1233zd(E) ou R1336mzz5z, et dans lequel le premier circuit (1) et le deuxième circuit (2) sont reliés uniquement par des caloporteurs (WT) et les caloporteurs (WT) sont constitués sous la forme de caloporteurs pour faisceau tubulaire.

9. Procédé suivant la revendication 8, dans lequel le deuxième circuit (2) prélève au moins une partie de l'énergie (Q) calorifique du premier circuit (1).

10. Procédé suivant l'une des revendications 8 ou 9, dans lequel au moins une autre pompe (WP) à chaleur injecte de l'énergie (Q) calorifique dans le premier circuit (1) et/ou dans le deuxième circuit (2).

11. Installation industrielle de fabrication d'une matière première, notamment fabrique de papier ou fabrique de cellulose, comportant une installation suivant l'une des revendications 1 à 7.
